# EUROPÄISCHE PATENTSCHRIFT

(11) **EP 1 596 062 B1**
(45) Veröffentlichungstag und Bekanntmachung des Hinweises auf die Patenterteilung: **02.05.2012**
(21) Anmeldenummer: 04011472.0
(22) Anmeldetag: 14.05.2004
(51) Int. Cl.: G01F 1/10, G01F 15/00, G01P 5/06, F03D 11/00

(54) **Flügelrad**
Vaned rotor
Rotor à aubes

(43) Veröffentlichungstag der Anmeldung: 16.11.2005
(73) Patentinhaber: Flytec AG, 6048 Horw (CH)
(72) Erfinder: Joder, Peter, 6010 Kriens (CH); Lerch, Erich, 6206 Neuenkirch (CH)
(74) Vertreter: Troesch Scheidegger Werner AG

(56) Entgegenhaltungen:
- DE-A- 2 553 578
- FR-A- 2 461 928
- GB-A- 765 206
- US-A- 5 939 645
- PATENT ABSTRACTS OF JAPAN Bd. 0123, Nr. 19 (P-751), 30. August 1988 (1988-08-30) & JP 63 085315 A (OSAKA GAS CO LTD; others: 01), 15. April 1988 (1988-04-15)
- PATENT ABSTRACTS OF JAPAN Bd. 0060, Nr. 62 (P-111), 21. April 1982 (1982-04-21) & JP 57 004511 A (YAMATAKE HONEYWELL CO LTD), 11. Januar 1982 (1982-01-11)

## Beschreibung

Die vorliegende Erfindung betrifft ein Verfahren zur Herstellung eines Flügelrades gemäss dem Oberbegriff nach Anspruch 1, ein achsgelagertes Flügelrad, sowie eine Verwendung eines Flügelrades.

Achsgelagerte Flügelräder, wie beispielsweise Windränder in Windmessgeräten, sind mit ihrer Achse je endständig, in der Regel frei drehbar, möglichst reibungsarm gelagert, um eine weitgehend widerstandsfreie, d.h. reibungsfreie, Drehbarkeit des Rades zu gewährleisten.

Vgl. hierzu z.B. JP-A-63085315.

Die beweglichen Flügel sind beispielsweise auf gehärteten Metallachsen aufgespritzt, welche Achsen je endständig nun in zwei Lagern, wie beispielsweise Saphirlagern, gelagert sind. Die Saphirlager können beispielsweise in Gewindebuchsen eingelagert sein und durch Ein- bzw. Ausschrauben dieser Gewindebuchsen kann das Spiel des Windflügels eingestellt werden. Die Lagerung ist sehr reibungsarm, da die Spitzen der Achse nicht mit Reibung auf den Saphiren drehen, sondern sie rollen sich in einer kreisförmigen Bewegung im Trichter ab. Diese Lagerungsart wird in der Regel in empfindlichen Messinstrumenten verwendet, wie beispielsweise in Windmessgeräten.

Ein Problem stellen nun die unterschiedlichen Wärmeausdehnungskoeffizienten der beteiligten Materialien dar. Die Metallachse hat einen Wärmeausdehnungskoeffizient α von in der Regel < 20 ppm/K, wie beispielsweise ca. 18 ppm/K. Ein für Messgeräte verwendetes Kunststoffgehäuse hat in der Regel einen Wärmeausdehnungskoeffizienten, welcher wesentlich höher ist, wie beispielsweise von mehr als 50 ppm/K, d.h. von ca. 80 ppm/K oder gar mehr. Wenn beispielsweise das Spiel bei 25°C optimal eingestellt ist, ist bei 60°C das Spiel zu gross, weil sich das Kunststoffgehäuse stärker ausdehnt, und bei -25°C klemmt die Achse, weil umgekehrt sich das Kunststoffgehäuse zusammenzieht. Eine Problemlösung bestünde nun darin, das Windrad in einem Metallring zu lagern, der den gleichen Wärmeausdehnungskoeffizienten aufweist wie die Achse. Ebenfalls könnte man das Gehäuse beispielsweise aus Zinkdruckguss herstellen, aber aufgrund der kleinen Abmessungen, insbesondere bei Messgeräten wie einem Windrand, ist dies in der Regel technisch gar nicht möglich. Die kleinsten Strukturen, die gusstechnisch machbar sind, sind ca. 1 mm. Zudem sind Gussverfahren viel zu teuer. Als Metalle eignen sich nur solche, die einen ähnlichen Temperaturkoeffizienten aufweisen wie das Achsmaterial.

Eine Aufgabe der vorliegenden Erfindung besteht nun darin, ein Verfahren für die Herstellung eines Messgerätes, beinhaltend ein achsgelagertes Flügelrad, vorzuschlagen bzw. ein achsgelagertes Flügelrad zu schaffen, bei welchem bei der Herstellung vom günstigen Kunststoffspritzgussverfahren profitiert werden kann und bei welchem jedoch die obgenannten Nachteile bzw. Probleme vermieden werden können.

Erfindungsgemäss wird entsprechend ein Verfahren zur Herstellung eines achsgelagerten Flügelrades gemäss dem Wortlaut nach Anspruch 1 vorgeschlagen, bzw. ein Flügelrad gemäss dem Wortlaut nach Anspruch 4.

Vorgeschlagen wird ein achsgelagertes Flügelrad, welches in einem zylinderrohr- oder windkanalartigen Durchgang frei drehbar angeordnet ist, wobei wenigstens entlang einem Teil der Achslänge des Windrades eine das Windrad ringförmig umgebende Manschette, Armierung bzw. ein Rohrabschnitt angeordnet ist, welche bzw. welcher einen geringen Wärmeausdehnungskoeffizienten aufweist.

Vorzugsweise ist die Achse des Flügelrades endständig je beidseits des Flügelrades in je einem Lager angeordnet, welches mit dem das Flügelrad umgebenden Gehäuse verbunden ist und wobei, wenigstens teilweise im Gehäuse eingelassen die Manschette bzw. das Armierungsrohr angeordnet ist.

Das Gehäuse kann aus einem Polymerwerkstoff gefertigt sein und die Manschette bzw. Rohrarmierung ist vorzugsweise aus Metall oder ggf. einem verstärkten, wenigstens teilweise vernetzten Polymer hergestellt.

Gemäss einer bevorzugten Ausführungsvariante ist das Flügelrad saphirgelagert und das Gehäuse aus einem wenigstens nahezu thermoplastischen Polymer hergestellt. Die Rohrarmierung bzw. Manschette, welche das Flügelrad umgibt, ist aus Metall, wie vorzugsweise Messing, gefertigt.

Die Lager des Flügelrades können beidseits je in einem auf dem rohrförmigen Durchgang aufgesetzten Aufsatzteil bzw. in einer einen Ring aufweisenden Endkappe angeordnet sein, welche Aufsatzteile mit dem rohrförmigen Durchgang beispielsweise mittels Kleben, Schweissen, einer Schnappverbindung, etc. verbunden sein können. Selbstverständlich ist es möglich, nur auf einer Seite des rohrförmigen Durchgangs eine sogenannte Endkappe vorzusehen, währenddem auf der gegenüberliegenden Seite die Lagerung integral mit dem das Flügelrad umgebenden Gehäuse verbunden sein kann.

Weitere bevorzugte Ausführungsvarianten des erfindungsgemässen Flügelrades sind in abhängigen Ansprüchen charakterisiert.

Bei der Herstellung eines erfindungsgemässen Flügelrades wird in die Spritzform für das Herstellen des Gehäuses bzw. rohrförmigen Durchgangs, in welchem das Flügelrad anzuordnen ist, zunächst eine Metallhülse bzw. ein Metallring eingelegt, welcher wenigstens nahezu der Achslänge des Flügelrades entspricht, worauf das vorzugsweise thermoplastische Polymer in die Spritzform eingespritzt wird. Dabei ist die Dicke des Gehäuses bzw. rohrförmigen Durchganges derart zu wählen, dass beim Abkühlen des vorzugsweise thermoplastischen Polymers in der Spritzform, die Festigkeit des Polymers um die Metallhülse bzw. den Metallring nicht unterschritten und der Kunststoff zerrissen wird.

Nach Ausformen des gespritzten Gehäuses wird das ebenfalls mittels Spritzguss hergestellte Flügelrad zwischen die Gewindebuchsen, welche je endständig am Gehäuse im Durchgang angeordnet sind, eingelegt und durch Einschrauben der Gewindebuchsen frei drehbar festgelegt.

Dabei ist es beispielsweise möglich, die Lagerung des Flügelrades am einen Ende des Gehäuses gleichzeitig mit dem Gehäuse zu spritzen, währenddem diejenige Öffnung des Durchgangs, durch welche das Flügelrad in den Durchgang eingesetzt wird, schliesslich mittels einem Aufsatzteil bzw. einer sogenannten Endkappe zu versehen ist, in welcher die weitere Lagerung des Flügelrades angeordnet ist. Dieses Aufsatzteil bzw. diese Endkappe kann schliesslich mittels Kleben, Schweissen, Schnappverbindungen, etc. am Gehäuse befestigt werden.

Das erfindungsgemäss definierte Flügelrad eignet sich für Massendurchflussmessgeräte, insbesondere Windmessgeräte und Flüssigkeitsgeschwindigkeitsmessgeräte.

Die Erfindung wird nun beispielsweise und unter Bezug auf die beigefügten Figuren näher erläutert. Dabei zeigen:
- Fig. 1: ein Windrand in Längsschnitt bekannt aus dem Stand der Technik;
- Fig. 2: in Längsschnitt ein Windrad, aufweisend die erfindungsgemäss vorgeschlagene rohr- oder ringförmige Hülse;
- Fig. 3: im Querschnitt entlang der Linie I-I das Windrad gemäss Fig. 2. und
- Fig. 4 und 5: mögliche Ausgestaltungen von Aufsatzteilen bzw. Endkappen für das Zusammenfügen des Windrades bzw. für die Lagerung des Flügelrades im Windrad.

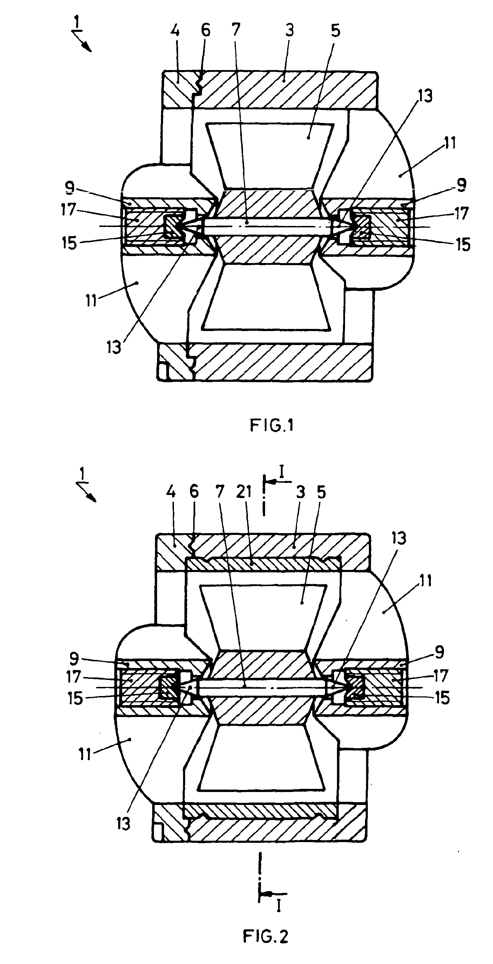

Fig. 1 zeigt im Längsschnitt ein Windrad 1, aufweisend ein rohrförmig ausgebildetes Gehäuse 3 in welchem ein beispielsweise vierflügeliges Windrad 5 angeordnet ist. Sowohl das Gehäuse, wie auch die Flügel des Windrades sind vorzugsweise aus einem wenigstens nahezu thermoplastischen Polymer gefertigt, wie beispielsweise Polyamid, Polypropylen, POM, Polykarbonat, etc.. Das Windrad 5 ist auf eine metallene Drehachse 7 aufgespritzt, welche Achse je seitlich in Gewindebuchsen 9 gelagert ist, wobei die spitz ausgebildeten Enden 13 der Metallachse in Saphirlagern 15 innerhalb der Gewindebuchsen 9 eingelagert sind. Für die Feinjustierung der Saphirlager 15 ist ein beispielsweise schraubbares Element 17 angeordnet. Die Gewindebuchsen 9 werden ihrerseits im oder am Gehäuse mittels Querstegen, respektive sternförmig nach aussen verlaufenden Stegen 11 gehalten, welche in einem Abdeckteil bzw. einer Endkappe 4 angeordnet sind. Das Abdeckteil 4 ist beispielsweise geklebt oder geschweisst über eine Trennstelle 6 mit dem rohrförmigen Gehäuse 3 verbunden. Die Erfahrung hat gezeigt, dass bei unterschiedlichen Umgebungstemperaturen ein beispielsweise bei 25°C justiertes Windrad bei erhöhten Temperaturen zu viel Spiel aufweist und ein Verkanten möglich ist, währenddem bei tiefen Temperaturen durch Kontraktion des Gehäuses das Windrad blockiert wird.

Aus diesem Grund wird vorgeschlagen, und wie in Fig. 2 im Längsschnitt schematisch dargestellt, entlang der Längsausdehnung der Metallachse 7 in der äusseren rohrförmigen Gehäusewandung 3 - in dieser wenigstens teilweise eingelassen - eine Metallhülle oder rohrförmige Metallmanschette 21 anzuordnen. Das Anordnen dieses Metallringes erfolgt, indem der Metallring in das Kunststoffgehäuse eingespritzt wird. Wohl weisen Metall und Kunststoff immer noch einen unterschiedlichen Wärmeausdehnungskoeffizienten auf, da aber die Metallhülse entlang der Länge der Achse 7 eine grössere Festigkeit aufweist als der Kunststoff (E-Modul beispielsweise von Messing beträgt ca. 103 · 10⁹ Pa gegenüber dem E-Modul von POM mit ca. 3,2 · 10⁹ Pa) ist die Metallhülse 21 in der Lage die Wärmeausdehnung des Kunststoffes des Gehäuses 3 zu stabilisieren. Natürlich muss die Kunststoffdicke des Gehäuses derart gewählt werden, dass beim Abkühlen des Kunststoffes in der Spritzform bei der Herstellung die Festigkeit des Kunststoffringes um die Metallhülse nicht unterschritten und der Kunststoff zerrissen wird.

Aus Fig. 2 ist nun deutlich erkennbar, dass entlang der Länge der Achse 7 des Windrades 5 auch die seitlich angeordneten Gewindebuchsen 9 mit den darin eingelagerten Saphirlagern 15 in Längsrichtung keine unterschiedliche Bewegung ausführen kann, als die entsprechende der Metallachse 7. Mit anderen Worten, bei Erhöhung der Temperatur ist die Aufweitung des Spiels zwischen den beiden seitlich angeordneten Saphirlagern 15 weitgehend identisch mit der Längsausdehnung der Metallachse 7. Analog verkürzt sich die Distanz zwischen den beiden Saphirlagern 15 entsprechend der Kontraktion der Metallachse 7 des Windrades 5. Als Resultat bleibt das Spiel praktisch über den ganzen Temperatureinsatzbereich eines Windrades über konstant, womit auch die Windmessung unverfälscht bleibt.

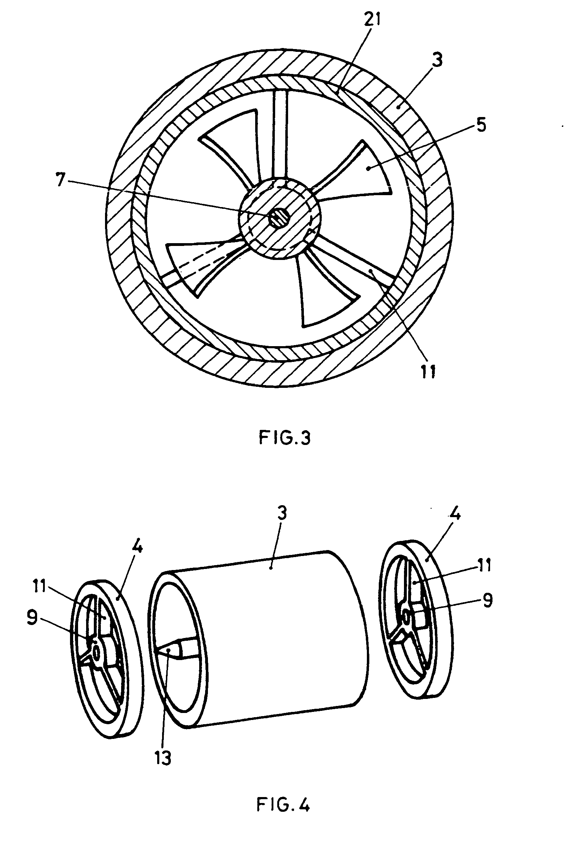

Fig. 3 zeigt im Querschnitt das Windrad aus Fig. 2 entlang der Linie I-I, wobei deutlich die das Windrad 5 umgebende Metallhülse bzw. Manschette 21 erkennbar ist. Gestrichelt dargestellt - da im Schnittbereich nicht enthalten - sind die seitlich, mindestens einseitig in einem Abdeckteil 4 verlaufenden Querstege, respektive sternförmigen Stege 11, mittels welchen die mittigen Gewindebuchsen 9 an der äusseren Gehäusewandung 3 gehalten sind.

Für den Metallring können selbstverständlich alle gebräuchlichen Metalle verwendet werden, vorzugsweise wird dasselbe Metall verwendet, wie dasjenige, aus welchem die Metallachse des Windrades gefertigt ist. Geignet ist beispielsweise Messing, wobei selbstverständlich auch andere Metalle verwendet werden können - wichtig ist, dass das Metall geeignet ist, um im Verbund mit einem thermoplastischen Polymer verwendet werden zu können.

Denkbar ist auch die Verwendung eines verstärkten, wenigstens teilweise oder vollständig vernetzten Polymers, welches ebenfalls einen wesentlich geringeren Wärmeausdehnungskoeffizienten besitzt als üblicherweise verwendete Thermoplasten. Denkbar ist beispielsweise ein mittels Glasfasern, Kohlefasern oder Aramidfasern verstärktes Polymer, wie beispielsweise Polyamid.

Fig. 4 zeigt eine mögliche Ausführungsvariante, wie ein Windrad 1 zusammengesetzt werden kann bzw. wie ein in ein Gehäuse eingesetztes Flügelrad festgesetzt und positioniert werden kann. Nach Einschieben eines Flügelrades in das Gehäuse 3 können beidseits oder nur auf einer Seite ein sogenanntes Aufsatzteil 4 angeordnet werden, welches die nach aussen verlaufenden Stege 11 umfasst mit der mittig angeordneten Gewindebuchse 9. Die in Fig. 4 dargestellten beiden Aufsatzteile 4 bzw. auch bezeichnet als Endkappen werden nun auf das Gehäuse 3 aufgesetzt, wobei die beiden endständigen Drehachsen 7 je in entsprechende Saphirlager (nicht dargestellt) eingeführt werden, worauf die beiden Abschlussteile 4 fest mit dem Gehäuse 3 verbunden werden, beispielsweise mittels Kleben, Ultraschallschweisse oder aber auch, indem entsprechende Schnappverbindungen vorgesehen sind. Nach festem Zusammenfügen des Windradgehäuses erfolgt schliesslich die Feinjustierung mittels der oben erwähnten schraubbaren Elemente.

Selbstverständlich ist es möglich, die eine der beiden in Fig. 4 dargestellten Endkappen integral mit dem Gehäuse 3 beispielsweise beim Spritzgiessen zusammen herzustellen und nur eine Abschlusskappe 4 nachträglich nach Einführen des Flügelrades aufzusetzen.

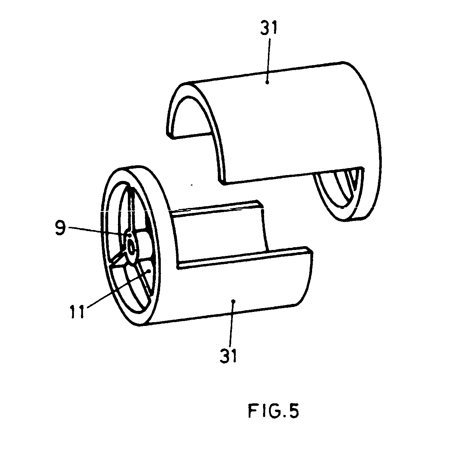

Die oben erwähnten Herstellverfahren für das Herstellen eines erfindungsgemässen Windrades stellen selbstverständlich nur Beispiele dar und es ist durchaus möglich, andere Verfahren zu wählen, wie beispielsweise unter Bezug auf Fig. 5 dargestellt. So ist es beispielsweise möglich zwei quasi halbschalenartige Teile 31 mittels Spritzgiessen herzustellen, wobei beide Teile je eine der beiden unter Bezug auf Fig. 4 dargestellten Endkappen integral beinhalten. So ist es beispielsweise möglich, die eine halbschalenartige Gehäusewandung 31 zusammen mit der einen Endkappe mittels Spritzgiessen herzustellen, anschliessend eine Metallmanschette einzulegen, weiter in die Metallmanschette von der einen offenen Seite das Flügelrad einzufügen und schliesslich durch Aufsetzen der anderen Halbschale das Windrad zu komplettieren, wobei die beiden halbschalenartigen Teile 31 wiederum mittels Kleben, Schweissen, Schnappverbindungen, etc. zusammengefügt werden können. Die Feinjustierung erfolgt wiederum mittels schraubbarer Elemente, wie unter Bezug auf Fig. 1 beschrieben.

Auch die zwischen den beiden Halbschalen eingefügte Metallmanschette kann mittels Kleben, Schweissen, etc. mit den jeweiligen Halbschalenwandungen der beiden Teile 31 verbunden werden.

Das in den Fig. 2 bis 5 aufgezeigte erfindungsgemässe Windrad stellt selbstverständlich nur ein Beispiel eines Flügelrades dar, wie erfindungsgemäss definiert. Selbstverständlich kann eine andersartige Konstruktion gewählt werden und keinesfalls ist die vorliegende Erfindung auf ein vierflügeliges Windrad in einem Gehäuse, wie dargestellt, eingeschränkt. Verwendet werden kann auch ein dreiflügeliges Windrad, mehrflügeliges Windrad und auch das Gehäuse kann andersartig ausgebildet sein. Auch können für die Herstellung des Gehäuses die verschiedensten polymeren Werkstoffe verwendet werden, wobei sich thermoplastische Polymere als bevorzugt erwiesen haben.

Erfindungswesentlich ist lediglich die Verwendung einer, das Flügelrad einhüllenden, rohrförmigen Arretierung, welche wenigstens teilweise in das, das Flügelrad umgebende, Gehäuse eingelassen angeordnet ist. Die Längsausdehnung der rohrförmigen Arretierung muss wenigstens nahezu der Achslänge des Flügelrades entsprechen.

## Patentansprüche

1. Verfahren zur Herstellung eines achsgelagerten Flügelrades, angeordnet in einem Gehäuse bildend einen zylinderrohrförmigen oder windkanalartigen Durchgang mit einer wenigstens entlang einem Teil der Achslänge des Flügelrades, dieses umgebend angeordneten Manschette oder Armierung, welche Manschette oder Armierung einen niedrigen bzw. geringen Wärmeausdehnungskoeffizienten aufweist, **dadurch gekennzeichnet, dass** zunächst in eine Spritzform für das Herstellen des Gehäuses bzw. rohrförmigen Durchganges eine Hülse aus Metall oder einem verstärkten, wenigstens teilweise vernetzten Polymer zur Bildung der rohrförmigen Armierung bzw. Manschette eingelegt und anschliessend ein Polymerwerkstoff in die Form eingespritzt wird, wobei die Dicke des Polymerwerkstoffes derart gewählt werden muss, dass beim Abkühlen des Werkstoffes in der Spritzform die Festigkeit des Werkstoffes im Bereich der Hülse nicht unterschritten wird und der Polymerwerkstoff zerreissen kann.

2. Verfahren nach Anspruch 1, **dadurch gekennzeichnet, dass** als Polymerwerkstoff ein thermoplastisches Polymer verwendet und in die Spritzform eingespritzt wird.

3. Verfahren nach einem der Ansprüche 1 oder 2, **dadurch gekennzeichnet, dass** nach Ausformen des Gehäuses ein auf eine Metallachse aufgespritztes Flügelrad mittig im Gehäuse angeordnet wird und ggf. einseitig die Achse in einem Lager eingeführt wird, anschliessend das andere Ende der Achse durch Aufsetzten eines Aufsatzteiles bzw. einer Endkappe auf das Gehäuse, enthaltend das andere Lager, ebenfalls festgelegt wird und durch Drehen von gewindeartigen Elementen in Gewindebuchsen in mindestens einem der Lager und Längsverschiebung vom Lager, wie Saphirlager, das Flügelrad frei drehbar im Gehäuse adjustiert wird.

4. Flügelrad, hergestellt nach einem der Ansprüche 1 bis 3, **dadurch gekennzeichnet, dass** die Lagerung der Achse (7) engständig je beidseits des Flügelrades (5) in je einem Lager (9) angeordnet ist, welche mit dem das Flügelrad (5) umgebenden Gehäuse (3) verbunden ist, und dass das Armierungsrohr bzw. die Manschette (21) im Bereich des Flügelrades (5) wenigstens teilweise im Gehäuse eingelassen angeordnet ist.

5. Flügelrad nach Anspruch 4, **dadurch gekennzeichnet, dass** die Rohrarmierung bzw. Manschette aus Metall oder einem verstärkten, wenigstens teilweise vernetzten Polymer gefertigt ist.

6. Flügelrad nach einem der Ansprüche 4 oder 5, **dadurch gekennzeichnet, dass** die Achse des Flügelrades je endständig saphirgelagert ist, wobei die Saphirlager je in einer Gewindebuchse angeordnet sind und mittels einem vorzugsweise schraubbaren Element (17) längsverschieblich positionierbar sind.

7. Flügelrad nach einem der Ansprüche 4 bis 6, **dadurch gekennzeichnet, dass** das Gehäuse (3) aus einem thermoplastischen Polymer gefertigt ist wie Polypropylen, POM, Polyamid, Polykarbonat oder einem anderen geeigneten Thermoplasten.

8. Flügelrad nach einem der Ansprüche 4 bis 7, **dadurch gekennzeichnet, dass** die Rohrarmierung bzw. Manschette aus Metall wie bspw. Messing gefertigt ist.

9. Flügelrad nach einem der Ansprüche 4 bis 8, **dadurch gekennzeichnet, dass** die ring- oder rohrförmige Manschette bzw. Armierung (21) das Flügelrad umgebend bzw. einhüllend angeordnet ist und sich wenigstens nahezu von einem Ende der Achse des Windrades bis zum anderen Ende des Windrades erstreckt.

10. Flügelrad nach einem der Ansprüche 4 bis 9, **dadurch gekennzeichnet, dass** das Lager (9) des Flügelrades (5) wenigstens auf einer Seite in einem auf dem rohrförmigen Durchgang aufgesetzten Aufsatzteil bzw. in einer ringförmig ausgebildeten Endkappe (4) angeordnet ist, welches Aufsatzteil mit dem rohrförmigen Durchgang bspw. mittels Kleben, Schweissen, Schnappverbindungen, etc. verbunden ist.

11. Verwendung eines Flügelrades nach einem der Ansprüche 4 bis 10 als Windrad bzw. Windmessgerät.

## Claims

1. Method of manufacturing an axially-mounted vaned rotor, arranged in a housing forming a tubular cylindrical or wind-channel-like passageway with a sleeve or reinforcement arranged encircling at least along a part of the axis length of the vaned rotor, this sleeve or reinforcement exhibiting a low thermal expansion coefficient, **characterised in that** initially a sleeve of metal or of a reinforced, at least partially cross-linked polymer, for forming the tubular reinforcement or sleeve, is placed into an injection mould for producing the housing or tubular passageway, and subsequently a polymer material is injected into the mould, whereby the thickness of the polymer material must be chosen such that, when the material cools in the injection mould, the tensile strength of the material in the region of the sleeve is not exceeded such that the polymer material can break.

2. Method according to claim 1, **characterised in that** a thermoplastic polymer is used as the polymer material and is injected into the injection mould.

3. Method according to one of claims 1 or 2, **characterised in that** after removing the housing from the mould, a vaned rotor moulded onto a metal axle is arranged centred in the housing and if applicable one end of the axle is introduced into a bearing, and subsequently the other end of the axle is likewise secured by attaching a supporting part or an end cap, containing the other bearing, on the housing, and the vaned rotor is adjusted to freely rotate in the housing by rotation of screw-like elements in threaded inserts in at least one of the bearings and longitudinal shifting of the bearing, such as a sapphire bearing.

4. Vaned rotor manufactured according to one ofclaims 1-3, **characterised in that** bearing of the axle (7) is arranged at the end on both sides of the vaned rotor (5) each in a respective bearing (9) which is connected with the housing (3) encircling the vaned rotor (5), and **in that** the reinforcement tube orsleeve(21) is arranged at least partly embedded into the housing in the region of the vaned rotor (5).

5. Vaned rotor according to claim 4, **characterised in that** the reinforcement tube or sleeve is made from metal or from a reinforced, at least partially cross-linked polymer.

6. Vaned rotor according to one of claims 4 or 5, **characterised in that** the axle of the vaned rotor is supported at each end in a sapphire bearing, whereby the sapphire bearings are each arranged in a threaded insert and are longitudinally positionable by means of a preferably threaded element (17).

7. Vaned rotor according to one of claims 4-6, **characterised in that** the housing (3) is made from a thermoplastic polymer such as polypropylene, POM, polyamide, polycarbonate, or another suitable thermoplastic.

8. Vaned rotor according to one of claims 4-7, **characterised in that** the reinforcement tube or sleeve is made of metal such as, for instance, brass.

9. Vaned rotor according to one of claims 4-8, **characterised in that** the ring-shaped or tubular-shaped sleeve or reinforcement (21) is arranged surrounding or enshrouding the vaned rotor and extends from at least almost from one end of the axle of the vaned rotor to the other end of the vaned rotor.

10. Vaned rotor according to one of claims 4-9, **characterised in that** the bearing (9) of the vaned rotor (5) is arranged on at least one side in a supporting part or in a ring-shaped end cap attached to the tubular passageway, the supporting part being connected with the tubular passageway for instance by means of glueing, welding, snap-connectors, etc.

11. Use of a vaned rotor according to one of claims 4-10 as a windmill or a wind measuring device.

## Revendications

1. Procédé de fabrication d'un rotor à aubes pivoté sur un axe agencé dans une carapace formant un passage cylindrique tubulaire ou de forme de tunnel aérodynamique ayant une manchette ou renforcement le long au moins d'une partie de la longueur de l'axe du rotor à aubes disposé autour du rotor à aubes, cette manchette ou renforcement possédant un coefficient d'expansion bas ou faible, **caractérisé en ce qu'**une douille en métal ou en polymère renforcé au moins partiellement réticulé, pour former le renforcement tubulaire ou la manchette, est disposé premièrement dans une moule à injection pour former la carapace ou passage tubulaire, et ensuite une matière polymérique est injectée dans la moule, l'épaisseur de la matière polymérique étant choisie de sorte que, lorsque la matière se refroidit dans la moule à injection, la résistance de la matière dans la région de la douille n'est pas dépassé et la matière polymérique ne peut pas être déchirée.

2. Procédé selon la revendication 1, **caractérisé en ce qu'**une polymère thermoplastique est employée comme matière polymérique et est injectée dans la moule à injection.

3. Procédé selon l'une des revendications 1 ou 2, **caractérisé en ce que**, après avoir pris la carapace de la moule, un rotor à aubes moulé sur une axe métallique est agencé centré dans la carapace et, le cas échéant, une de l'extrémité de l'axe est introduite dans un palier, et ensuite l'autre extrémité est également sécurisée par l'attachement d'une partie de support ou d'un embout de fermeture, contenant l'autre palier, sur la carapace, et le rotor à aubes est ajusté libre en rotation dans la carapace par rotation des éléments filetés situés dans des douilles filetées pourvues dans au moins l'un des paliers et par déplacement longitudinale du palier, le palier étant par instance en saphir.

4. Rotor à aubes fabriqué selon l'une des revendications 1 à 3, **caractérisé en ce que** l'entreposage de l'axe (7) est agencé de manière serre à chacune des deux côtés du rotor à aubes (5) dans un palier respectif accouplé avec la carapace entourant le rotor à aubes (5), et **en ce que** le tube de renforcement ou manchette (21) est agencé au moins partiellement noyé dans la carapace.

5. Rotor à aubes selon la revendication 4, **caractérisé en ce que** le tube de renforcement ou la manchette est fabriqué au moins partiellement en métal ou d'un polymère renforcé au moins partiellement réticulé.

6. Rotor à aubes selon l'une des revendications 4 ou 5, **caractérisé en ce que** l'axe du rotor à aubes est entreposé aux deux extrémités dans des paliers en saphir, les paliers en saphir étant agencés chacun dans une douille filetée et sont positionnables longitudinalement par moyen d'un élément préférablement fileté.

7. Rotor à aubes selon l'une des revendications 4 à 6, **caractérisé en ce que** la carapace (3) est construite d'un polymère thermoplastique tel que le polypropylène, le POM, le polyamide, le polycarbonate, ou une autre matière thermoplastique appropriée.

8. Rotor à aubes selon l'une des revendications 4 à 7, **caractérisé en ce que** le tube de renforcement ou la manchette est fabriqué d'un métal, par instance du laiton.

9. Rotor à aubes selon l'une des revendications 4 à 8, **caractérisé en ce que** la manchette en forme de bague ou tube ou le renforcement (21) est agencé(e) entourant ou enrobant le rotor à aubes, et s'étend de près d'une extrémité de l'axe de l'éolienne jusqu'à l'autre extrémité de l'éolienne.

10. Rotor à aubes selon l'une des revendications 4 à 9, **caractérisé en ce que** le palier (9) du rotor à aubes (5) est agencé à au moins une côté dans une partie de support ou dans un embout de fermeture en forme de bague attaché au passage tubulaire, la partie de support étant attaché au passage tubulaire par moyen de colle, soudage, encliquetage, etc.

11. Utilisation d'un rotor à aubes selon l'une des revendications 4 à 10 comme éolienne ou comme dispositif de mesure du vent.
